# EUROPEAN PATENT APPLICATION

(11) **EP 3 699 853 A1**
(43) Date of publication of application: **26.08.2020**
(21) Application number: 18867815.5
(22) Date of filing: 19.10.2018
(51) Int. Cl.: G06Q 20/32, G06Q 20/38, G06Q 20/40

(54) **PAYMENT PROCESSING SERVICE SYSTEM AND METHOD USING USER TERMINAL**

(30) Priority: 20.10.2017 KR 20170136638
(71) Applicant: Jeong, Hye Jin, Iksan-si, Jeollabuk-do 54625 (KR)
(72) Inventor: Jeong, Hye Jin, Iksan-si, Jeollabuk-do 54625 (KR)
(74) Representative: RGTH
(86) International application number: PCT/KR2018/012399
(87) International publication number: WO 2019/078668

(57) **Abstract**

The present invention provides a payment processing service system comprising: a payment requester terminal which transmits, to a payment approval requester, at least one information among payment requester information, a charged amount and a charge classification code number; a payment approval requester terminal which checks at least one information among the payment requester information, the charged amount, a settlement approval amount, the charge classification code number and payment approval requester information, and requests, to a payment service providing server, for approval for the payment of the amount; and the service providing server which has at least one information among the payment approval requester information and the payment requester information, and processes the payment by the request of the payment approval requester terminal.

## Description

### [Technical Field]

The present invention relates to a settlement processing service and method for performing payment using a user terminal.

### [Background Art]

Recently, a so-called fintech in which a finance scheme and an IT technology have been combined has been in the spotlight. Fintech evaluated as a change of the finance paradigm is extended up to financial services and financial platform construction services in offline in addition to conventional online financial services.

An electronic device in which fintech is implemented has various forms, such as a smartphone capable of being carried by a user or a wearable device which can be attached to some of the body of a user. Such an electronic device is higher-functionalized due to the development of the information technology (IT) technology, and can provide various functions to a user.

Manufacturers of the electronic devices focus on various efforts for the development of an electronic device for realizing fintech and the construction of a payment system through cooperation with a credit card company or a bank.

Meanwhile, upon settlement through a card payment, card information or bank information of a payment approval requester is provided to a payment claimant. Personal information leakage and hacking damage occur due to information provided to the payment claimant.

Furthermore, in a conventional card payment method, when card information is input and a card payment is requested from a server, the server verifies the validity of the card. Accordingly, there is a problem with an overload of the server because the server determines whether the card is valid. There is a problem with settlement depending on a communication speed with the server or processing performance of a user terminal because the user terminal has to frequently communicate with the server.

### [Prior Art Document]

### [Patent Document]

(Patent Document 1) Korean Patent Application Laid-Open No. 10-2014-0143036
(Patent Document 2) Korean Patent No. 10-1739119

### [Disclosure]

### [Technical Problem]

Various embodiments of the present invention have an object of providing a settlement processing service system and method capable of preventing personal information leakage or hacking damage which may occur because card information or bank information of a payment approval requester is provided to a payment claimant upon settlement for payment.

### [Technical Solution]

According to one aspect of the present invention for achieving the object, there is provided a settlement processing service system including:

a payment claimant terminal transmitting, to a payment approval requester, one or more pieces of information of payment claimant information, an amount in controversy, and a code number to identify a demand;

the payment approval requester terminal confirming one or more pieces of information of the payment claimant information, the amount in controversy, a payment approval amount, the code number to identify a demand, and payment approval requester information and requesting a payment approval from a payment service provision server;

the service provision server having one or more pieces of information of the payment approval requester information and the payment claimant information and performing settlement processing in response to a request from the payment approval requester terminal.

The payment claimant terminal may have one or more forms of paper, a computer, a smart device, text, and an image.

The payment claimant terminal encodes and transmits one or more pieces of information of the payment claimant information, the code number to identify a demand, and an order number. The service provision server decodes one or more pieces of information of the encoded payment claimant information, the code number to identify a demand, and the order number.

The payment approval requester terminal transmits, to the payment claimant terminal, one or more data of radio communication, text, an image, and bio information scan.

If the service provision server does not have the payment claimant information, the service provision server requests one or more of the verification of an identity, the decoding of the encoded payment claimant information, and the payment claimant information from another service provision server having the payment claimant information.

The payment claimant terminal transmits, to the payment approval requester terminal, one or more pieces of information of a code or ID capable of identifying a server in which at least the payment claimant information has been stored.

The payment approval requester terminal transmits, to the service provision server, one or more pieces of information of a key capable of obtaining the payment claimant information and the payment approval amount.

If the service provision server does not have the payment approval requester information, the service provision server requests one or more of the verification of an identity of the payment approval requester, the decoding of the encoded payment approval requester information, and settlement processing from another service provision server having the payment approval requester information.

The payment approval requester terminal transmits, to the service provision server, a key capable of accessing the another service provision server in order for the service provision server to obtain one or more pieces of information of the verification of the identity, the decoding of the encoded payment approval requester information, and the settlement processing.

The payment approval requester terminal encodes and transmits data transmitted to the service provision server.

The service provision server includes the charging DB of the payment approval requester account. The charging of the account uses one or more methods of a service gift voucher, a cash exchange voucher, an account transfer, and a direct deposit.

The service provision server pays for payment claimant account based on an amount charged in the charged account.

According to another embodiment of the present invention, there is provided a settlement processing service method including steps of:

transmitting, by a payment claimant terminal, one or more pieces of information of payment claimant information, an amount in controversy, a code number capable of identifying a demand to a payment approval requester terminal;

confirming, by the payment approval requester terminal, one or more pieces of information of the payment claimant information, the amount in controversy, the code number capable of identifying a demand and requesting a payment approval from a service provision server;

having, by the service provision server, one or more pieces of information of the payment approval requester information and the payment claimant information and performing settlement processing in response to a request received from the payment approval requester terminal.

The payment claimant terminal encodes one or more pieces of information of at least the payment claimant information, the code number capable of identifying a demand, and an order number. The service provision server decodes the one or more pieces.

If the service provision server does not have the payment claimant information, the service provision server requests, from another server having the payment claimant information, one or more of the verification of an identity of the payment claimant, the decoding of the encoded payment claimant information, and the payment claimant information.

The payment claimant terminal transmits, to the payment approval requester terminal, one or more pieces of information of a code or ID capable of identifying a server in which the payment claimant information has been stored.

The payment approval requester terminal transmits, to the service provision server, one or more pieces of information of a key capable of obtaining information of the payment claimant and the payment approval amount.

If the service provision server does not have the payment approval requester information, the service provision server requests, from another server having the payment approval requester information, one or more of the verification of an identity of the payment approval requester, the decoding of the encoded payment approval requester information, the payment approval requester, and settlement processing.

The payment approval requester terminal transmits, to the service provision server, a key capable of accessing the another server in order for the service provision server to obtain one or more pieces of information of the verification of an identity of the payment approval requester, the decoding of the encoded payment approval requester information, the payment approval requester information, and the settlement processing.

The payment approval requester terminal encodes and transmits data transmitted to the service provision server.

Meanwhile, according to another embodiment of the present invention, there is provided a settlement processing service method including the steps of:
a) generating, by a payment claimant terminal, payment information, including user identification information of a payment claimant and an amount in controversy, in order to demand payment from a payment approval requester terminal;
b) obtaining, by the payment claimant terminal, the payment information;
c) transmitting, by payment claimant terminal, the payment information and user identification information of a payment approval requester to a service provision server; and
d) performing, by the service provision server, verification of the payment claimant, obtaining account information of the payment claimant using the user identification information of the payment claimant, and remitting the amount in controversy to the account of the payment claimant.

The user identification information of the payment claimant includes a user identification code and a franchise identification code to which the payment claimant has subscribed.

In the step d), the service provision server requests account information of the payment claimant by transmitting the user identification code and the franchise identification code to another service provision server corresponding to the franchise identification code.

The another service provision server verifies the payment claimant based on the user identification code and the franchise identification code. When the verification is successful, the another service provision server transmits the account information of the payment claimant to the service provision server.

The payment approval requester may have a charging account in the service provision server. In the step d), upon payment, the amount in controversy from the charging account of the payment approval requester is remitted to the account of the payment claimant.

### [Advantageous Effects]

According to various embodiments of the present invention, there can be provided the settlement processing service system and method capable of efficiently protecting personal information by preventing personal information of a user, that is, a payment claimant, or a payment approval requester from being transmitted to each other because a user identification code is assigned to the user who uses a payment service when the user subscribes to the payment service and the payment service is provided based on the user identification code.

### [Description of Drawings]

FIG. 1 is a diagram schematically illustrating a payment system according to an embodiment of the present invention.
FIG. 2 is a flowchart illustrating a payment method according to an embodiment of the present invention.
FIG. 3 is a flowchart illustrating a payment method according to another embodiment of the present invention.
FIG. 4 is a flowchart illustrating a payment method according to another embodiment of the present invention.
FIG. 5 is a flowchart illustrating a payment method according to another embodiment of the present invention.
FIG. 6 is a flowchart illustrating a payment method according to another embodiment of the present invention.
FIG. 7 is a flowchart illustrating a payment method according to another embodiment of the present invention.
FIG. 8 is a flowchart illustrating a payment method according to another embodiment of the present invention.

### [Best Mode for Invention]

Embodiments of the present invention are described hereinafter in detail with reference to the accompanying drawings, in order for a person having ordinary skill in the art to which the present invention pertains to carry out the present invention. The present invention may be modified in various different ways, and is not limited to the disclosed embodiments herein. In order to clarify a description of the present invention, a description of parts not related to the description is omitted, and the same reference numbers are used throughout the specification to refer to the same or like parts.

Embodiments of the present invention are described in detail below with reference to the accompanying drawings.

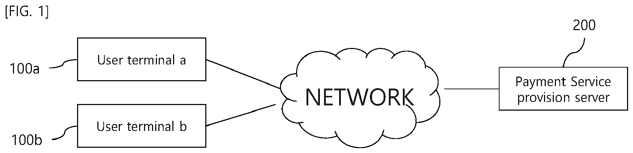

FIG. 1 is a diagram schematically illustrating a card payment system according to an embodiment of the present invention. As illustrated, the card payment system according to an embodiment of the present invention may include a plurality of user terminals 100a, 100b, ... and one or more card service provision server 200. The apparatuses included in the card payment system of FIG. 1 may be interconnected over a network. For example, the elements may be interconnected over a mobile communication network, through the internet or over a short-distance wireless communication network (e.g., near field communication (NFC), wireless-fidelity (Wi-Fi) or magnetic stripe transmission (MST).

A payment application is stored in the user terminal 100 and executed upon payment and upon receiving payment. Various electronic devices, such as a smartphone, a tablet PC, a PC, a wearable device, and a point of sales (POS) system in which an application can be installed may be used as the user terminal 100. The user terminal 100 may download a payment application through the Internet connected over wired and wireless communication networks. The payment application may be a payment menu including SNS. The payment application may be downloaded by accessing a card company or a financial institution server (not illustrated) or a payment service provision server 300 or may be downloaded through an app store. According to one embodiment, the payment application may provide a user interface related to payment. For example, the payment application may provide user interfaces related to account opening, payment, a demand, charging, and account confirmation or transactions. Furthermore, the payment application may provide an interface related to user authentication through identification and verification (ID&V), for example. In the user terminal 100, the payment application may be installed in a storage space, such as a universal subscriber identity module USIM) chip, an internal memory or an external memory. The payment system according to an embodiment of the present invention may perform a demand for payment and pay for a thing using the user terminal. A payment application for a payment claimant and a payment application for a payment approval requester may be separately provided, and a single payment application may perform both payment request and payment functions. The payment claimant refers to the side that demands or receives payment, and the payment approval requester refers to the side that pays for a thing.

The service provision server 200 is a server that provides a payment service to which a user has subscribed, and is the server of a franchise headquarter. The franchise headquarter may be a financial institution, such as a card company or a bank. When a user subscribes to a payment service, the service provision server 200 transmits a user identification code and a franchise identification code to a user terminal. The user terminal 100 stores the user identification code and franchise identification code and uses the stored user identification code and franchise identification code upon demand for payment or payment using the payment service. When a settlement request is received from a settlement processing requester terminal 100a, the service provision server 200 performs user verification based on user information received from the user terminal 100a along with settlement request information. When the user verification is successful, the service provision server 200 performs payment claimant verification by requesting the payment claimant verification from the server of a franchise headquarter based on a franchise identification code 220. When the payment claimant verification is successful, the service provision server 200 obtains payment claimant account information by receiving the payment claimant account information from another service provision server having the payment claimant account, performs settlement processing, and transmits the results of the settlement processing to the payment claimant and/or the settlement processing requester terminal 100a, 100b. If a user and a payment claimant are one of franchises of the same franchise headquarter, the same service provision server 200 performs settlement processing requester verification and payment claimant verification. If user and a payment claimant do not belong to the same franchise headquarter, payment claimant verification and payment claimant account information are requested from a corresponding service provision server 200b based on a franchise identification code, and the corresponding service provision server 200b performs settlement processing. Furthermore, the service provision server 200 according to an embodiment of the present invention includes a DB in which account information, user identification code and franchise identification code of each of users including a settlement processing requester and a payment claimant are stored. The service provision server 200 includes a charging account DB for each user so that subtraction from the charging account is performed upon payment based on a payment service.

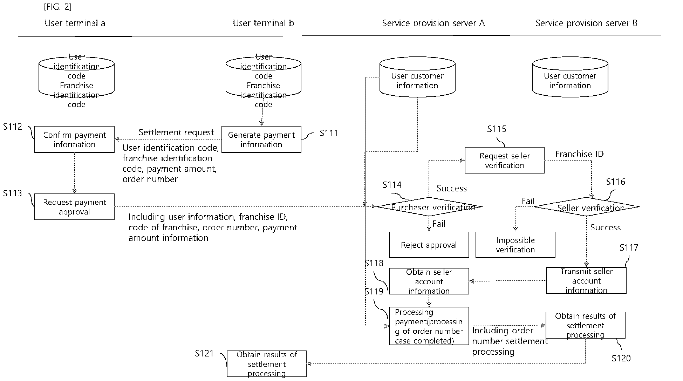

Meanwhile, FIGS. 2 to 8 are flowcharts illustrating payment methods using a user terminal according to embodiments of the present invention. Hereinafter, payment methods using a user terminal according to embodiments of the present invention are described with reference to FIGS. 2 to 8.

In the embodiment illustrated in FIG. 2, a user terminal is a payment approval requester terminal, a user terminal b is a payment claimant terminal, a service provision server A is the service provision server of a franchise headquarter to which the user terminal a has subscribed, and a service provision server B is the service provision server of a franchise headquarter to which the user terminal b has subscribed. As illustrated, the payment method according to the first embodiment of the present invention is described as follows. The payment claimant terminal b 100b generates payment information in order to demand payment from the payment approval requester (Sill). The payment information may include the user identification code b and franchise identification code b of the payment claimant, a payment amount, and an order number. The payment information is implemented in the form of a QR code or barcode. The payment claimant terminal a 100a may receive the payment information by photographing the QR code or barcode. The payment information may be transmitted to the payment claimant terminal a 100a through NFC. The payment information may be transmitted through an instant messenger, such as KakaoTalk, Line, Telegram, Skype or Wechat, or short message service (SMS). A settlement request is performed through the transmission of the payment information. The payment information may be printed on paper in an image or text form and may be transmitted. The payment claimant terminal a 100a confirms the payment amount, etc. through the received payment information (S112). If the payment claimant terminal a 100a wants payment, it requests settlement processing from the service provision server A 200a (S113). Upon requesting of the settlement processing, the payment claimant terminal a transmits, to the service provision server A 200a, user information including the user identification code a and franchise identification code a of the payment approval requester, payment claimant information including the user identification code b and franchise identification code b of the payment claimant, the order number, and payment amount information. The payment claimant terminal a may transmit the information to the server using a payment application. After receiving the settlement processing request, the service provision server A 200a performs user verification on the payment approval requester (S114). The service provision server A 200a rejects approval when the user verification fails, and requests payment claimant verification from the service provision server B 200b of the payment claimant when the user verification is successful (S115). In the user verification, one or more of various methods, such as user information, a password, bio recognition, identification recognition, certificate recognition, and credit card recognition of the payment approval requester received when the settlement processing request is received may be used. The payment claimant verification request is performed by transmitting the user identification code b and/or franchise identification code b of the payment claimant to the service provision server B 200b of a franchise headquarter based on the franchise identification code b of the payment claimant using the user identification code b and franchise identification code b included in the payment claimant information received when the settlement processing request is received (S115). The service provision server B 200b of the payment claimant performs payment claimant verification using the user identification code b and/or the franchise identification code b (S116). When the verification is successful, the service provision server B 200b transmits, to the service provision server A 200a, payment claimant account information matched with the user identification code b and stored in a user customer information DB (S117). The payment approval requester service provision server A 200a obtains account information of the payment claimant (S118), and processes the payment request requested by the payment approval requester based on the account of the payment claimant (S119). When payment reception is confirmed based on the payment claimant account (S120), the payment claimant service provision server B 200b transmits the results of the settlement processing to the payment approval requester and/or payment claimant terminals 100a and 100b (S121).

If the payment method using a user terminal according to the first embodiment of the present invention is used, the payment approval requester and the payment claimant can perform a demand for payment and payment without exchanging personal information, such as card information, account information, and a telephone number. Furthermore, a demand for payment and payment are possible between users who have not subscribed to the same payment service, financial company or card company.

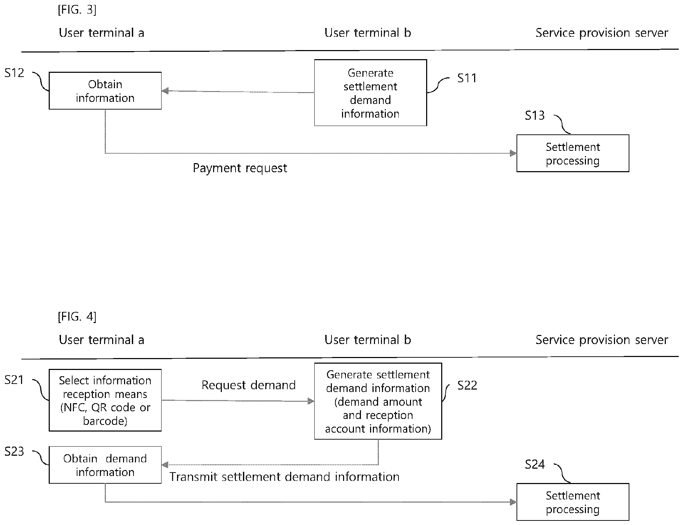

FIG. 3 is a flowchart illustrating a payment method using a user terminal according to the second embodiment of the present invention. As illustrated, the payment method according to the second embodiment of the present invention is described as follows. The payment claimant terminal b 100b generates settlement demand information (S11). The settlement demand information may be generated in a QR code or barcode form. The payment claimant terminal a 100a obtains the settlement demand information from the payment claimant terminal b 100b using an NFC or image scan function (S12). The payment approval requester requests settlement demand contents, and requests settlement processing from the service provision server A 200a. The service provision server A 200a performs user verification on the payment approval requester. When the user verification is successful, the service provision server A 200a performs settlement processing by sending payment to the payment claimant account (S13).

If the payment method using a user terminal according to the second embodiment of the present invention is used, personal information can be protected more safely because payment can be performed even without transmitting account information or card information to a payment claimant. Furthermore, a payment claimant and a payment approval requester can perform transactions between accounts more easily even without a task for registering and databasing separate giro information upon transactions between accounts.

FIG. 4 is a flowchart illustrating a payment method using a user terminal according to a third embodiment of the present invention. As illustrated, the payment method according to the third embodiment of the present invention is described as follows. The payment approval requester executes the payment application of the user terminal a 100a, selects information reception means (NFC, QR code or barcode), and requests a demand for payment (S21). The payment claimant executes the payment application of the user terminal b 100b, generates settlement demand information including a demand amount and reception account information by inputting a payment amount, and transmits settlement demand information to the payment claimant terminal a 100a (S22). The payment approval requester that has received the payment information requests the settlement demand information from the service provision server 200 along with user information of the payment approval requester. The service provision server 200 performs user verification on the payment approval requester. When the user verification is successful, the service provision server 200 performs settlement processing by sending payment to the payment claimant account (S24).

If the payment method using a user terminal according to the third embodiment of the present invention is used, personal information can be protected more safely because payment can be performed even without transmitting account information or card information to a payment claimant. Furthermore, a payment claimant and a payment approval requester can perform transactions between accounts more easily even without a task for registering and databasing separate giro information upon transactions between accounts.

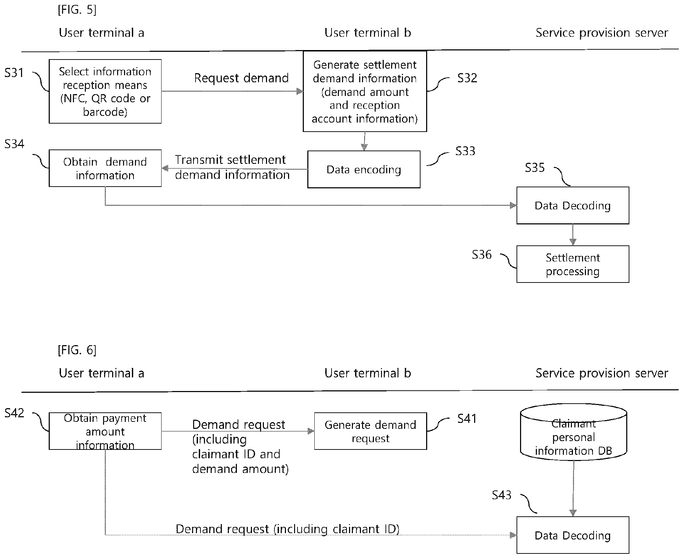

FIG. 5 is a flowchart illustrating a payment method using a user terminal according to the fourth embodiment of the present invention. As illustrated, the payment method according to the fourth embodiment of the present invention is described as follows. The payment approval requester executes the payment application of the user terminal a 100a, selects information reception means (NFC, QR code or barcode), and requests a demand for payment (S31). The payment claimant executes the payment application of the user terminal b 100b, and generates settlement demand information including a demand amount and reception account information by inputting a payment amount (S32). The user terminal b 100b encodes the generated settlement demand information and transmits it to the payment claimant terminal a 100a (S33). The payment approval requester that has received the payment information requests settlement processing from the service provision server 200 by transmitting the settlement demand information along with user information of the payment approval requester (S34). The service provision server 200 decodes the encoded settlement demand information (S35) and performs user verification on the payment approval requester. When the user verification is successful, the service provision server 200 performs settlement processing by sending payment to the payment claimant account (S36).

According to the fourth embodiment of the present invention, a payment claimant and a payment approval requester can perform transactions between accounts more easily even without a task for registering and databasing separate giro information upon transactions between accounts. Furthermore, information of the payment claimant can be protected more safely because the payment claimant encodes and transmits settlement demand information.

FIG. 6 is a flowchart illustrating a payment method using a user terminal according to a fifth embodiment of the present invention. As illustrated, the payment method according to the fifth embodiment of the present invention is described as follows. When the payment claimant executes the payment application of the user terminal b 100b and inputs an amount in controversy, the payment application generates settlement demand information along with the user identification code of the payment claimant, and requests a settlement demand from the payment claimant terminal a 100a by transmitting the settlement demand information (S41). The payment approval requester that has received the payment information requests settlement processing from the service provision server 200 by transmitting the settlement demand information along with user information of the payment approval requester (S34). The service provision server 100 that has received the request for the settlement processing extracts account information of the payment claimant from a user information DB using the user identification code of the payment claimant included in the payment information, and performs settlement processing by sending payment to the payment claimant account (S43).

According to the fifth embodiment of the present invention, a payment claimant and a payment approval requester can perform transactions between accounts more easily even without a task for registering and databasing separate giro information upon transactions between accounts. The payment claimant and the payment approval requester can perform settlement processing without exchanging personal numbers, such as card information, account information, and a terminal number.

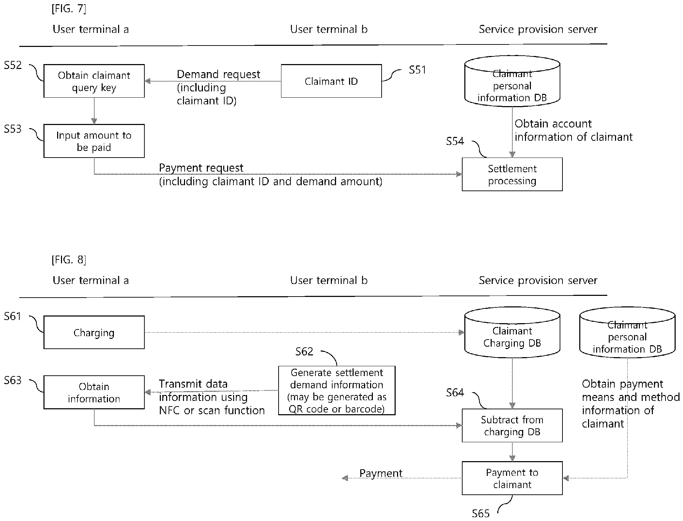

FIG. 7 is a flowchart illustrating a payment method using a user terminal according to a sixth embodiment of the present invention. As illustrated, the payment method according to the sixth embodiment of the present invention is described as follows. The payment claimant executes the payment application of the user terminal b 100b, and requests a settlement demand by transmitting the user identification code of the payment claimant to the payment claimant terminal a 100a (S51). The payment approval requester executes the payment application of the user terminal a 100a, and receives the user identification code of the payment claimant from the payment claimant terminal b 100b (S52). Next, the payment approval requester inputs an amount to be paid, generates payment information including the user identification code of the payment claimant, and requests settlement processing by transmitting the payment information to the service provision server (S53). The service provision server 100 that has received the request for settlement processing extracts account information of the payment claimant from a user information DB using the user identification code of the payment claimant included in the payment information, and performs settlement processing by sending payment to the payment claimant account (S54).

If the payment method using a user terminal according to the sixth embodiment of the present invention is used, personal information can be protected more safely because payment can be performed even without transmitting account information or card information to a payment claimant. Furthermore, a payment claimant and a payment approval requester can perform transactions between accounts more easily even without a task for registering and databasing separate giro information upon transactions between accounts.

FIG. 8 is a flowchart illustrating a payment method using a user terminal according to a seventh embodiment of the present invention. As illustrated, the payment method according to the seventh embodiment of the present invention is described as follows. A user (payment approval requester) generates a charging account in the service provision server 100, and may charge the charging account by remitting payment to the charging account (S61). For a demand for payment and payment between the payment claimant and the payment approval requester, the payment claimant executes the payment application of the user terminal b 100b and generates settlement demand information (S62). The settlement demand information may be generated in a QR code or barcode form. The payment claimant terminal a 100a obtains the settlement demand information from the payment claimant terminal b 100b using an NFC or image scan function (S63). The payment approval requester confirms the settlement demand contents and requests settlement processing from the service provision server A 200a. The service provision server A 200a performs user verification on the payment approval requester. When the user verification is successful, the service provision server A 200a subtracts an amount from the charging account of the payment approval requester, and performs settlement processing by sending payment to a payment claimant account (S64 and S65).

If the payment method using a user terminal according to the seventh embodiment of the present invention is used, personal information can be protected more safely because payment can be performed even without transmitting account information or card information to a payment claimant. Furthermore, a payment claimant and a payment approval requester can perform transactions between accounts more easily even without a task for registering and databasing separate giro information upon transactions between accounts.

### [Description of reference numerals]

100 : user terminal 200 payment service provision server

## Claims

1. A settlement processing service system comprising:
a payment claimant terminal transmitting, to a payment approval requester, payment claimant information, an amount in controversy, and a code number to identify a demand;
the payment approval requester terminal confirming the payment claimant information, the amount in controversy, the code number to identify a demand, a payment approval amount, and payment approval requester information and transmitting a payment approval request to a payment service provision server; and
the service provision server having one or more pieces of information of the payment approval requester information and the payment claimant information and performing settlement processing in response to a request from the payment approval requester terminal,
wherein if the service provision server does not have the payment approval requester information, the service provision server requests one or more of identity verification of the payment approval requester, the payment approval requester information, and the settlement processing from another server having the payment approval requester information.

2. The settlement processing service system of claim 1, wherein:
the payment claimant terminal encodes one or more pieces of information of the payment claimant information, the code number to identify a demand, and the order number, and
the service provision server decodes one or more pieces of information the encoded payment claimant information, the code number to identify a demand, and the order number.

3. The settlement processing service system of claim 1, wherein:
the service provision server comprises a charging DB of a payment approval requester account, and
the charging of the account uses one or more methods of a service gift voucher, a cash exchange voucher, an account transfer, and a direct deposit.

4. A settlement processing service method comprising steps of:
transmitting, by a payment claimant terminal, payment claimant information, an amount in controversy, a code number capable of identifying a demand to a payment approval requester terminal;
confirming, by the payment approval requester terminal, one or more pieces of information of the payment claimant information, the amount in controversy, the code number capable of identifying a demand and transmitting a payment approval request to a service provision server; and
having, by the service provision server, one or more pieces of information of the payment approval requester information and the payment claimant information and performing settlement processing in response to a request received from the payment approval requester terminal,
wherein if the service provision server does not have the payment approval requester information, the service provision server requests one or more of identity verification of the payment approval requester, the payment approval requester information, and the settlement processing from another server having the payment approval requester information.

5. The settlement processing service method of claim 4, wherein:
the payment claimant terminal encodes one or more pieces of information of at least the payment claimant information, the code number capable of identifying a demand, and an order number, and
the service provision server decodes the one or more pieces of information.

6. A settlement processing service method comprising steps of:
a) generating, by a payment claimant terminal, payment information, comprising user identification information of a payment claimant and an amount in controversy, in order to demand payment from a payment approval requester terminal;
b) transmitting, by the payment claimant terminal, the payment information to the payment approval requester terminal;
c) transmitting, by the payment approval requester terminal, the payment information and user identification information of a payment approval requester to a service provision server; and
d) performing, by the service provision server, verification of the payment claimant, obtaining account information of the payment claimant using the user identification information of the payment claimant, and remitting the amount in controversy to the account of the payment claimant,
wherein the user identification information of the payment claimant comprises a user identification code and a franchise identification code to which the payment claimant has subscribed, and
wherein in the step d), the service provision server requests the account information of the payment claimant by transmitting the user identification code and the franchise identification code to another service provision server corresponding to the franchise identification code.

7. The settlement processing service method of claim 6, wherein:
the payment approval requester is capable of having a charging account in the service provision server, and
in the step d), the amount in controversy from the charging account of the payment approval requester is remitted to the account of the payment claimant upon payment.
